# FASCICULE DE BREVET EUROPEEN

(11) **EP 3 898 305 B1**
(45) Date de publication et mention de la délivrance du brevet: **05.11.2025**
(21) Numéro de dépôt: 19848971.8
(22) Date de dépôt: 20.12.2019
(51) Int. Cl.: B60K 11/04, F28F 9/00

(54) **SYSTEME THERMIQUE D'UN VEHICULE AUTOMOBILE**
WÄRMESYSTEM FÜR EIN KRAFTFAHRZEUG
THERMAL SYSTEM FOR A MOTOR VEHICLE

(30) Priorité: 20.12.2018 FR 1873464
(43) Date de publication de la demande: 27.10.2021
(73) Titulaire: Valeo Systemes Thermiques-THS, 78322 Le Mesnil Saint Denis Cedex (FR)
(72) Inventeur: TRINDADE, José, 78322 LE MESNIL SAINT-DENIS CEDEX (FR); TOURNOIS, Rémi, 78322 LE MESNIL SAINT-DENIS CEDEX (FR); BIREAUD, Fabien, 78322 LE MESNIL SAINT-DENIS CEDEX (FR)
(74) Mandataire: Valeo Powertrain Systems
(86) Numéro de dépôt international: PCT/FR2019/053257
(87) Numéro de publication internationale: WO 2020/128395

(56) Documents cités:
- EP-A1- 1 120 620
- EP-A2- 2 333 266
- GB-A- 2 373 571
- US-B1- 6 470 961

## Description

Le domaine de la présente invention est celui des systèmes thermiques pour véhicules automobiles et plus particulièrement des systèmes thermiques susceptibles d'équiper une face avant de véhicule automobile, et notamment de véhicule automobile électrique.

Le fonctionnement normal d'un véhicule automobile nécessite l'apport d'une importante quantité d'air afin de refroidir tous les organes nécessaires au fonctionnement du véhicule, notamment le refroidissement des moteurs électriques et/ou thermiques, et nécessaires au maintien en température de son habitacle. Cette importante quantité d'air est notamment captée par la face avant du véhicule et une partie du flux d'air capté est amenée à traverser un système thermique disposé entre la face avant du véhicule et le moteur du véhicule, avant d'être admise dans le moteur pour permettre la combustion du carburant. Les systèmes thermiques sont configurés pour permettre un échange de calories entre le flux d'air le traversant et différents fluides circulant à travers des échangeurs thermiques, tel que des radiateurs ou des condenseurs. Le ou les fluides ainsi refroidis sont utilisés pour des boucles de climatisation de l'habitacle du véhicule et/ou pour des circuits de refroidissement de composants du véhicule tel que des batteries par exemple.

Il est connu de prévoir des systèmes thermiques à plusieurs échangeurs thermiques avec un cadre de support de chacun de ces échangeurs thermiques. Afin de faciliter les opérations de fabrication des composants du système thermiques, et afin de faciliter les opérations d'assemblage des différents échangeurs et contrôler la position finale de chaque échangeur les uns par rapport aux autres, il est connu de prévoir un cadre de support monobloc. Les échangeurs thermiques sont classiquement fixés sur le cadre par une insertion selon une même face du cadre. Le cadre présente une face ouverte par laquelle les échangeurs sont successivement insérés, un premier échangeur thermique étant inséré en butée dans le fond du cadre et un deuxième échangeur thermique venant en recouvrement du premier échangeur thermique en étant fixé sur le cadre et/ou sur le premier échangeur thermique.

Par ailleurs, afin d'optimiser les performances des systèmes thermiques, il est souhaitable qu'un maximum d'air passe à travers chacun des échangeurs thermiques. Lorsque les différents échangeurs thermiques d'un système thermique sont fixés sur un cadre, il est ainsi souhaitable et connu de prévoir des moyens d'étanchéité entre le cadre et les échangeurs thermiques pour limiter les fuites de flux d'air entre les échangeurs et le cadre du système thermique. On comprend que de telles fuites diminuent la quantité d'air passant à travers la surface d'échange des échangeurs thermiques et diminuent donc les performances thermiques. Il est notamment de connu de disposer des joints d'étanchéité souples sur tout le pourtour de l'échangeur thermique susceptible d'être traversé en premier par le flux d'air et de faire porter ces joints d'étanchéité contre les parois latérales du cadre. Une telle configuration n'empêche toutefois pas la fuite d'air entre les échangeurs et les parois latérales du cadre, une fois que l'air a passé le premier des échangeurs thermiques.

Des exemples de systèmes thermiques d'un véhicule automobile comprenant un cadre monobloc composé principalement de deux parois latérales parallèles l'une à l'autre et de deux parois longitudinales parallèles l'une à l'autre et s'étendant perpendiculairement par rapport aux deux parois latérales sont aussi montrés dans les documents EP1120620A1 et EP2 333266A2.

L'invention s'inscrit dans ce double contexte et vise à proposer un système thermique qui permette en premier lieu un montage facile et fiable des différents échangeurs thermiques sur un même cadre monobloc de support.

L'invention concerne un système thermique d'un véhicule automobile comprenant un cadre monobloc composé principalement de deux parois latérales parallèles l'une à l'autre et de deux parois longitudinales parallèles l'une à l'autre et s'étendant perpendiculairement par rapport aux deux parois latérales, le cadre comprenant une face avant et une face arrière, caractérisé en ce que le cadre comprend sur chacune de ses deux faces des moyens de fixation d'au moins un échangeur thermique, lesdits moyens de fixation étant tels que des premiers moyens de fixation disposés sur la face avant du cadre sont configurés pour la fixation d'un échangeur thermique selon un premier sens d'insertion et que des deuxièmes moyens de fixation disposés sur la face arrière du cadre sont configurés pour la fixation d'un échangeur thermique selon un deuxième sens d'insertion opposé au premier sens d'insertion.

L'invention met en œuvre un cadre monobloc, qui permet via une seule pièce, obtenue simplement et économiquement par une unique opération de fabrication, la fixation avantageuse d'au moins deux échangeurs thermiques. Cette fixation est avantageuse en ce qu'un tel agencement permet de contrôler la distance entre les deux échangeurs thermiques après leur assemblage respectif sur le cadre, en diminuant les chaînes de côtes, puisque le cadre sert de référence commune à la fixation des deux échangeurs thermiques, via chacune de ses faces. On comprend en effet que selon l'invention, les côtes à prendre en compte pour l'assemblage du deuxième échangeur thermique sur le cadre ne concernent que les jeux de fabrication du cadre, du deuxième échangeur thermique et des moyens de fixation intégrés à ces deux éléments, sans prendre en considération les jeux de fabrication du premier échangeur thermique, contrairement à un assemblage où les échangeurs thermiques sont empilés les uns sur les autres du même côté du cadre.

Selon une caractéristique de l'invention, les premiers moyens de fixation et les deuxièmes moyens de fixation sont configurés pour la fixation de leur échangeur thermique respectif avec le cadre selon une direction transversale, perpendiculaire à un plan d'allongement principal des échangeurs thermiques en position fixe sur le cadre. En d'autres termes, les deux échangeurs thermiques respectivement fixés sur l'une des faces du cadre sont agencés de telle manière qu'ils présentent, après leur installation sur le cadre, un jeu axial entre eux, dans une direction perpendiculaire au plan d'allongement principal des échangeurs, c'est-à-dire dans une direction parallèle à une direction d'empilement des échangeurs thermiques. Le jeu axial permet de ménager un espace entre les deux échangeurs thermiques.

Chaque échangeur thermique peut notamment être fixé, sur la face du cadre qui lui est propre, par encliquetage suivant la direction transversale, le cadre pouvant comprendre un moyen d'encliquetage correspondant sur une seule de ses parois latérales ou sur les deux parois latérales.

Selon une caractéristique de l'invention, les premiers moyens de fixation et les deuxièmes moyens de fixation comportent des moyens de fixation par encliquetage, avec au moins un moyen de fixation déformable élastiquement selon une direction perpendiculaire à la direction transversale et comprenant une butée d'arrêt apte à bloquer la position transversale de l'échangeur thermique correspondant sur le cadre.

Selon l'invention, le cadre monobloc comprend au moins une paroi d'étanchéité qui s'étend en saillie d'une paroi latérale et/ou d'une paroi longitudinale du cadre, ladite paroi d'étanchéité comportant au moins une portion d'extrémité libre s'étendant dans un espace ménagé transversalement entre les deux échangeurs thermiques. On comprend que cette au moins une paroi d'étanchéité s'étend depuis une paroi latérale ou une paroi longitudinale, sensiblement vers l'intérieur du cadre.

En d'autres termes, la paroi d'étanchéité s'étend depuis une paroi latérale et elle présente une extrémité libre disposée à l'intérieur du cadre et agencée entre les deux échangeurs thermiques. Une telle disposition de la paroi d'étanchéité entre les deux échangeurs thermiques permet la formation de chicanes dans une zone latérale du système thermique entre les échangeurs et le cadre, zone latérale dans laquelle de l'air est susceptible de fuiter. La formation simple de chicanes, par une intégration de fonction dans le cadre monobloc, permet de compliquer la fuite de l'air entre les échangeurs thermiques et les parois latérales. On comprend que le montage des échangeurs thermiques sur le cadre sur deux faces opposées du cadre, via des sens d'insertion opposés, permet de mettre en œuvre une paroi d'étanchéité dont une extrémité libre s'étend transversalement entre les échangeurs thermiques. Cet agencement, qui participe à créer une chicane efficace car s'étendant suffisamment loin à l'intérieur du cadre pour avoir un effet sur la déviation potentielle du flux d'air, ne serait pas possible avec un montage des échangeurs thermiques depuis un même côté du cadre, la présence d'une telle paroi d'étanchéité gênant alors l'insertion du premier échangeur à insérer en butée contre la paroi de fond du cadre.

Selon une caractéristique de l'invention, cette au moins une paroi d'étanchéité s'étend dans un plan parallèle au plan d'allongement principal des échangeurs thermiques. Le plan principal d'allongement principal des échangeurs s'entend comme le plan disposé en travers de la direction principale du flux d'air lorsque les échangeurs sont fixés sur le cadre. Pour définir précisément la position de la paroi d'étanchéité, on pourra se référer à un plan moyen des différents plans d'allongement principal des échangeurs thermiques, ou bien à un unique plan moyen, par exemple celui du radiateur.

Selon l'invention, la paroi d'étanchéité a une épaisseur comprise entre 2,5mm et 3mm. On comprend que l'épaisseur de la paroi d'étanchéité se mesure selon la direction transversale, de sorte, que cette épaisseur doit être inférieure à une valeur seuil maximale pour que l'extrémité libre de la paroi d'étanchéité puisse être logée entre les échangeurs thermique, et doit être supérieure à une valeur seuil minimale pour que la chicane ainsi formée ait un effet obstruant visant à éviter les fuites d'air.

Selon l'invention, la paroi d'étanchéité s'étend de manière continue le long d'une paroi latérale du cadre.

Selon une caractéristique de l'invention, la ou les parois d'étanchéité s'étendent de telle sorte qu'elles forment obstruction au flux d'air visant à sortir sur les côtés du système thermique, sans toutefois bloquer la circulation de ce flux d'air au centre des échangeurs thermiques. Les échangeurs thermiques comportent chacun une surface d'échange délimitée latéralement par des collecteurs de fluide et le système thermique selon l'invention est tel que ces collecteurs de fluide sont disposés en regard des parois latérales lorsque les échangeurs thermiques sont fixés sur le cadre. Selon la caractéristique de l'invention mentionné précédemment, la paroi d'étanchéité est dimensionnée de telle sorte que l'extrémité libre est disposée longitudinalement en regard d'au moins une boite collectrice, ce qui permet que la paroi d'étanchéité n'obstrue pas le passage d'air à travers les surfaces d'échange des deux échangeurs thermiques.

Selon une caractéristique de l'invention, l'au moins une paroi d'étanchéité est issue de la matière formant le cadre. On réalise ainsi la ou les parois d'étanchéité dans la même étape de fabrication que celle du cadre, par exemple par injection de matière plastique.

De manière alternative, l'au moins une paroi d'étanchéité peut être réalisée dans un matériau différent du cadre, et par exemple en polymère, par exemple du polyamide, une telle matière présentant une bonne résistance à l'usure et une bonne rigidité. La paroi d'étanchéité peut alors être surmoulée sur la paroi latérale du cadre correspondante, ou bien consister en un élément indépendant rapporté sur cette paroi latérale.

Selon une caractéristique de l'invention, le cadre comprend au moins une paroi structurelle qui s'étend entre les deux parois longitudinales ou les deux parois latérales du cadre et entre les au moins deux éléments thermiques. La au moins une paroi structurelle est préférentiellement ajourée pour laisser un passage d'un échangeur thermique à l'autre pour le flux d'air amené à traverser le système thermique.

La au moins une paroi structurelle permet de renforcer la structure du cadre lors du montage du système thermique, le montage par encliquetage pouvant notamment générer des contraintes sur le cadre du fait de l'effort à appliquer sur les échangeurs thermiques pour les encliqueter. On comprend que ces parois structurelles sont également utiles lors du roulage du véhicule qui peut générer des vibrations du cadre.

Selon l'invention, les aux moins deux échangeurs thermiques sont un condenseur positionné sur la face arrière du cadre et un radiateur positionné sur la face avant du cadre, le condenseur et le radiateur étant disposés en série suivant une direction transversale du flux d'air à travers le système thermique. On comprend que la face avant du cadre est la face tournée vers l'extérieur du véhicule lorsque le cadre est monté dans la face avant du véhicule, et donc le radiateur positionné sur la face avant est l'échangeur thermique susceptible d'être traversé en premier par le flux d'air amené à traverser le système thermique. On entend par disposés en série le fait qu'ils soient traversés successivement par un même flux d'air.

L'invention couvre également un véhicule automobile comprenant au moins un système thermique suivant les caractéristiques précédentes.

L'invention couvre également un procédé d'assemblage du système thermique tel que précédemment décrit, dans lequel un premier échangeur thermique est positionné sur la face avant du cadre suivant un premier sens d'insertion et un deuxième échangeur thermique est positionné sur la face arrière du cadre suivant un deuxième sens d'insertion, les sens d'insertion étant opposés l'un par rapport à l'autre.

Le procédé d'assemblage selon l'invention est tel que les échangeurs thermiques sont disposés de part et d'autre d'un cadre de support, avec un premier échangeur thermique qui est fixé sur le cadre selon une première procédure d'assemblage et un deuxième échangeur thermique qui est fixé sur ce même cadre selon une deuxième procédure d'assemblage. La première procédure d'assemblage se finit par une fixation, par exemple par encliquetage, selon un premier sens d'insertion, par exemple un premier sens le long de la direction transversale perpendiculaire au plan d'allongement principal des échangeurs thermiques, et la deuxième procédure d'assemblage se finit par une fixation, par exemple par encliquetage, selon un deuxième sens d'insertion, par exemple un deuxième sens opposé au premier sens le long de la même direction transversale perpendiculaire au plan d'allongement principal des échangeurs thermiques. Les procédures d'assemblage se finissant par une fixation selon le premier ou le deuxième sens d'insertion pourront consister en différents types de procédure d'assemblage. Par exemple, l'échangeur thermique peut être fixé des deux côtés latéraux de la face correspondante par une même action de translation selon ce sens d'insertion. De manière alternative, l'échangeur thermique peut être dans un premier temps bloqué à une première extrémité latérale du cadre puis pivoté pour amener en regard l'échangeur thermique dans un plan sensiblement similaire au plan dans lequel il va s'étendre une fois fixé, puis dans un deuxième temps final poussé selon le sens d'insertion transversal pour être fixé définitivement sur le cadre.

D'autres caractéristiques, détails et avantages de l'invention ressortiront plus clairement à la lecture de la description donnée ci-après à titre indicatif en relation avec des dessins dans lesquels :
la [Figure 1] est une vue en perspective d'un système thermique selon l'invention, rendant visible un cadre et sa face avant sur laquelle est fixé un premier échangeur thermique ;
la [Figure 2] est une vue rapprochée d'une partie d'une paroi latérale de la face avant du cadre, rendant visible un moyen de fixation du premier échangeur thermique ;
la [Figure 3] est une vue du système thermique de la [Figure 1] sous un autre angle de perspective rendant visible le cadre et sa face arrière, opposée à la face avant visible sur la [Figure 1], et sur laquelle est fixé un deuxième échangeur thermique ;
la [Figure 4] est une vue rapprochée d'une partie d'une paroi latérale de la face arrière du cadre, rendant visible un moyen de fixation du deuxième échangeur thermique;
la [Figure 5] est une vue en perspective du cadre du système thermique selon l'invention ;
la [Figure 6] est une vue en coupe d'une première extrémité longitudinale du système thermique selon l'invention rendant visible la première paroi latérale du cadre et les deux échangeurs thermiques ;
la [Figure 7] est une vue en coupe d'une deuxième extrémité longitudinale du système thermique selon l'invention rendant visible la deuxième paroi latérale du cadre et les deux échangeurs thermiques.

Il faut tout d'abord noter que les figures exposent l'invention de manière détaillée pour mettre en œuvre l'invention, lesdites figures pouvant bien entendu servir à mieux définir l'invention le cas échéant.

Dans la suite de la description, on utilisera les dénominations longitudinale, verticale ou transversale pour définir l'orientation du système thermique selon l'invention ainsi que celle du cadre formant partie de ce système thermique. Plus particulièrement, la direction transversale correspond à la direction principale du flux d'air traversant le système thermique. Et les directions longitudinale et verticale définissent un plan d'allongement principal de l'un ou l'autre des échangeurs thermiques fixés sur le cadre, la direction longitudinale correspondant à la dimension principale du cadre dans le plan d'allongement principal tel qu'il vient d'être précisé. Les directions évoquées ci-dessus sont notamment illustrées par un trièdre LVT représenté sur les figures.

Le système thermique 1 selon l'invention comporte un cadre 2 sur lequel sont fixés au moins deux échangeurs thermiques, et par exemple un radiateur 8 et un condenseur 10, le cadre comprenant sur chacune de ses faces des moyens de fixation 29, 30 d'au moins un échangeur thermique. Tel que cela sera décrits plus en détails ci-après, les moyens de fixation sont tels que des premiers moyens de fixation 29 disposés sur une première face du cadre sont configurés pour la fixation d'un échangeur thermique selon un premier sens de fixation et des deuxièmes moyens de fixation 30 disposés sur une deuxième face du cadre sont configurés pour la fixation d'un échangeur thermique selon un deuxième sens de fixation, opposé au premier sens de fixation.

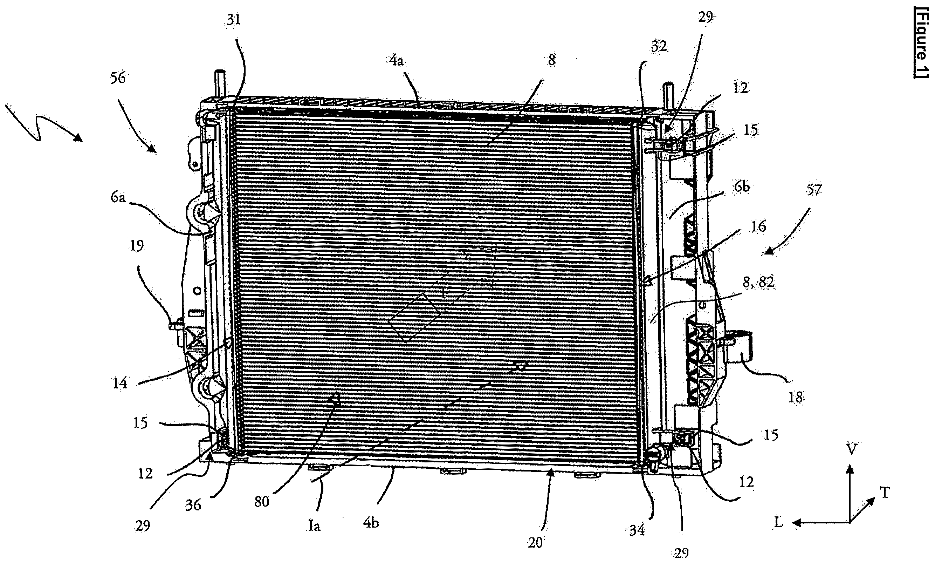

La [Figure 1] rend plus particulièrement visible la face avant 20 du cadre 2 sur laquelle est fixé un premier des deux échangeurs thermiques, à savoir ici un radiateur 8.

Le système thermique 1 s'étend principalement selon une dimension longitudinale et il présente une première extrémité longitudinale 56 et une deuxième extrémité longitudinale 57, opposée à la première extrémité longitudinale 56 suivant un axe longitudinal L. Par ailleurs, le système thermique est configuré pour être traversé par un flux d'air dont la direction principale est transversale, selon la flèche F visible sur la [Figure 1]. Le flux d'air ainsi amené à traverser le système thermique émane de l'extérieur du véhicule et pénètre par la face avant du véhicule avant de pénétrer dans le système thermique. On définit ainsi une face avant 20 du cadre, la face visible sur la [Figure 1], comme la face susceptible d'être en premier au contact du flux d'air traversant.

Le cadre 2 comprend une première paroi latérale 6a et une deuxième paroi latérale 6b parallèles entre elles et s'étendant respectivement, à chacune des extrémités longitudinales du système thermique 1, suivant un axe vertical V. Le cadre 2 comprend également une première paroi longitudinale 4a et une deuxième paroi longitudinale 4b, parallèles entre elles et s'étendant suivant l'axe longitudinal L du système thermique 1 pour relier entre elles la première paroi latérale 6a et la deuxième paroi latérale 6b. Le cadre 2 comprend alors un premier coin 31, un deuxième coin 32, un troisième coin 34 et un quatrième coin 36. On entend par coin la partie du cadre 2 où se rejoignent perpendiculairement une des parois longitudinales 4a, 4b et une des parois latérales 6a, 6b. Le cadre 2 présente un plan médian longitudinal et vertical, en prenant dans ce plan la forme d'un quadrilatère à angles droits, avec une dimension principale suivant la direction longitudinale L.

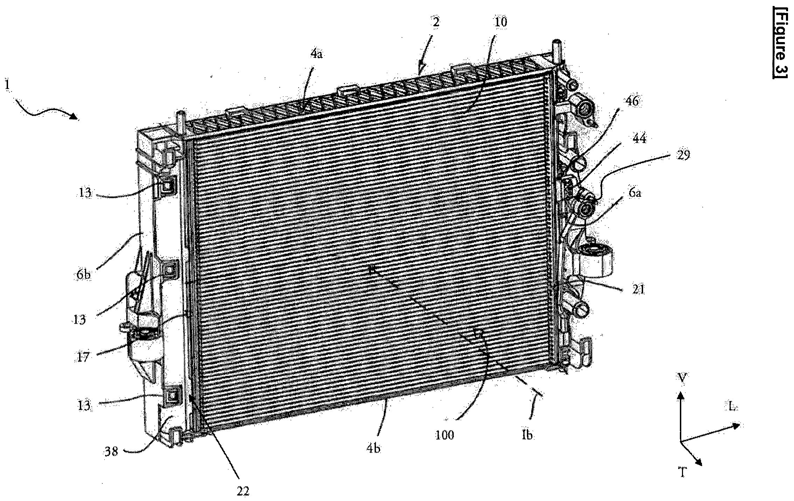

La [Figure 1] illustre également une première bague 18 et une deuxième bague 19. La première bague 18 est positionnée sur une face arrière, visible sur la [Figure 3], de la deuxième paroi latérale 6b du cadre 2 et fait saillie à la deuxième paroi latérale 6b du cadre 2.

La deuxième bague 19 est positionnée sur la face arrière de la première paroi latérale 6a du cadre 2 et fait saillie à la première paroi latérale 6a du cadre 2.

Les deux bagues 18, 19 ont pour fonction la fixation du système thermique 1 dans un véhicule automobile, par exemple sous la forme d'un vissage en coopérations avec les bagues 18,19.

Du côté de la face avant 20, visible sur la [Figure 1], le cadre 2 est configuré pour permettre la fixation du radiateur 8. Le radiateur 8 se présente sous la forme d'un parallélépipède comprenant une surface d'échange 80 et des chambres collectrices 82 disposées latéralement de part et d'autre de cette surface d'échange. Le radiateur 8 comprend ainsi une première extrémité latérale 14 formée par une chambre collectrice, qui se trouve en regard de la première paroi latérale 6a lorsque le radiateur est fixé sur le cadre, et une deuxième extrémité latérale 16 formée par une chambre collectrice, qui se trouve en regard de la deuxième paroi latérale 6b du cadre 2.

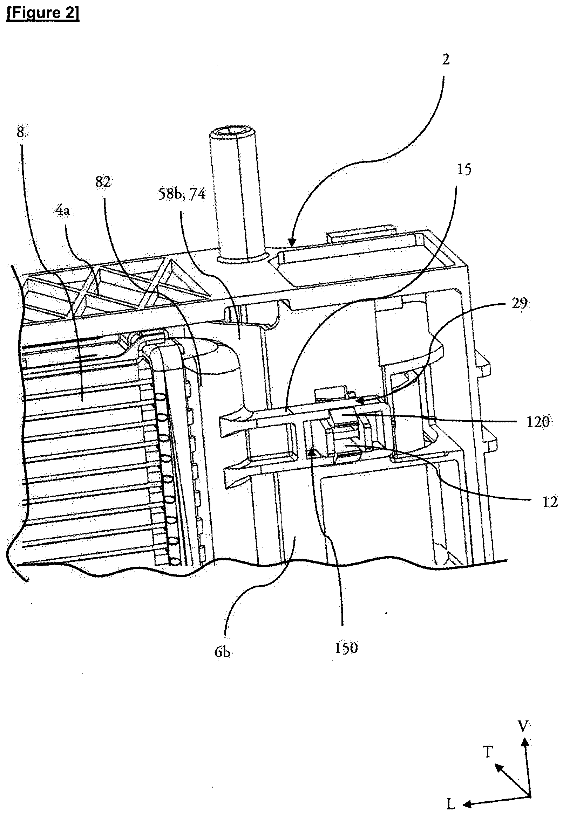

Dans la suite de la description, des premiers moyens de fixation 29 du radiateur 8 sur le cadre 2 seront décrits en se référant à la [Figure 1] et plus particulièrement en se référant à la vue de détail de la [Figure 2].

Les premiers moyens de fixation 29 permettant la fixation du radiateur sur le cadre sur sa face avant sont configurés pour permettre une fixation selon un premier sens d'insertion transversal, perpendiculaire au plan d'allongement du radiateur lorsqu'il est assemblé sur le cadre.

Les premiers moyens de fixation 29 présentent ici la forme de moyens d'encliquetage, configurés pour permettre la fixation du radiateur 8 sur le cadre selon un sens transversal d'insertion, ces moyens d'encliquetage comportant dans le cas illustré des organes de fixation solidaires du cadre et des languettes de fixation solidaires du radiateur et susceptibles de coopérer avec les organes de fixation.

Plus précisément, le système thermique 1 est configuré de telle sorte que le cadre comporte sur sa face avant 20 des organes de fixation 12 consistant respectivement en au moins une lame déformable élastiquement faisant saillie de l'un ou l'autre des parois latérales suivant une direction transversale T, à l'opposé du cadre. La lame présente un corps qui porte à son extrémité libre une forme de rampe 120 formant surface d'appui pour générer une déformation élastique de la lame, la rampe étant prolongée par un épaulement qui forme une surface d'arrêt pour la languette de fixation correspondante lorsque le radiateur est en position contre le cadre. Dans l'exemple illustré sur la [Figure 2], l'organe de fixation comporte deux lames disposées parallèlement et dont les rampes 120 respectives sont configurées pour générer un rapprochement des lames l'une par rapport à l'autre sous l'effet de ladite déformation élastique. Selon l'invention, le corps de chaque lame s'étend principalement selon la direction transversale et la surface d'arrêt de chaque lame s'étend sensiblement parallèlement au plan d'allongement principal du radiateur lorsque celui-ci est assemblé sur le cadre. De la sorte, l'organe de fixation est susceptible d'être déformé sous un effort parallèle à la direction transversale et il est apte à bloquer en position le radiateur selon cette même direction lorsqu'il reprend sa position après rappel élastique.

Un tel organe de fixation 12, formant élément mâle des premiers moyens de fixation 29, peut être disposé à chaque coin du cadre 2.

Tel que cela a été précisé, les premiers moyens de fixation 29 comportent en outre des languettes de fixation 15 formées sur le radiateur 8 pour coopérer avec les organes de fixation 12 solidaires du cadre 2. Des languettes de fixation 15 s'étendent longitudinalement depuis une boîte collectrice, de telle sorte qu'elles soient respectivement positionnées en regard d'un organe de fixation 12 précédemment décrit lorsque le radiateur est amené en position d'assemblage.

Chaque languette de fixation 15 comporte ici un évidement central 150 configuré pour recevoir les extrémités libres des lames d'un organe de fixation 12 correspondant. On comprend que l'évidement est dimensionné de manière à forcer sur les rampes au passage de l'organe de fixation à travers la languette, c'est-à-dire lors d'un déplacement transversal du radiateur en direction du cadre, selon un premier sens d'insertion la. En fin de translation du radiateur, la languette de fixation est au-delà de la rampe et vient se positionner dans le dégagement formé au niveau du corps de l'organe de fixation 12, de sorte que l'organe reprend sa position d'origine et que la butée formée par l'épaulement de la rampe bloque en position la languette de fixation et donc le radiateur.

Conformément à ce qui a été décrit précédemment, une telle languette de fixation, formant élément femelle des premiers moyens de fixation 29, peut être disposée à chaque extrémité verticale d'une boîte collectrice de manière à correspondre avec un organe disposé à chaque coin du cadre.

Dans l'exemple illustré sur la [Figure 1], on peut noter que des premiers moyens de fixation semblables sont disposés dans trois des coins du cadre, le quatrième coin étant équipé de premiers moyens de fixation intervertis par rapport à ceux qui sont présentement décrits, à savoir un organe mâle disposé sur le radiateur et une languette de fixation disposée sur le cadre, sans que cela soit limitatif de l'invention. Par ailleurs, on pourra prévoir que certains points de fixation du radiateur sur le cadre soient réalisés par des moyens de vissage, dès lors que ces moyens de vissage sont configurés pour réaliser la fixation du radiateur selon le premier sens d'insertion la tel qu'évoqué précédemment.

On comprend de ce qui précède que la fixation de chacune des extrémités latérales 14, 16 du radiateur 8 s'effectue simultanément sur la paroi latérale correspondante du cadre par encliquetage suivant la direction transversale T de chaque languette de fixation 15 avec l'organe de fixation 12 correspondant. On entend par encliquetage, un assemblage sans retour possible en arrière, par déformation élastique d'une pièce femelle sous un effort d'insertion d'une pièce mâle et par blocage de la pièce mâle par rappel élastique de la pièce femelle.

Tel que cela ressort de ce qui précède, le radiateur 8 est monté sur une première face, ou face avant 20, du cadre 2 selon un premier sens d'insertion la. Le premier sens d'insertion la s'étend suivant la direction transversale T du système thermique 1, de l'extérieur du système thermique 1 vers la première face du cadre 2.

La [Figure 3] représente le système thermique 1 sous un angle de perspective rendant visible la face arrière 22 du cadre, à savoir la face opposée à la face avant 20 précédemment décrite. Un deuxième échangeur thermique est fixé sur la face arrière 22 du cadre. Ici le deuxième échangeur thermique est un condenseur 10. Seront détaillés dans la suite de la description uniquement les éléments non détaillés dans la [Figure 1].

Le condenseur 10 comprend une surface d'échange 100 ainsi qu'une bouteille de déshydratation 38 installée latéralement par rapport à ladite surface d'échange, c'est-à-dire sur un bord d'extrémité longitudinale. La bouteille de déshydratation permet entre autres de déshydrater le circuit formé dans la surface d'échange du condenseur 10, de neutraliser les acides et de filtrer les particules fines. Dans la position assemblée illustrée sur la [Figure 3], la surface d'échange 100 est en travers du cadre et la bouteille de déshydratation est agencée dans une cavité formée dans la deuxième paroi latérale 6b du cadre 2.

Le condenseur 10 comprend une extrémité proximale 17, constituée par la bouteille de déshydratation 38 et une extrémité distale 21, éloignée de la bouteille de déshydratation 38 et opposée à l'extrémité proximale 17 suivant la direction longitudinale L du système thermique 1.

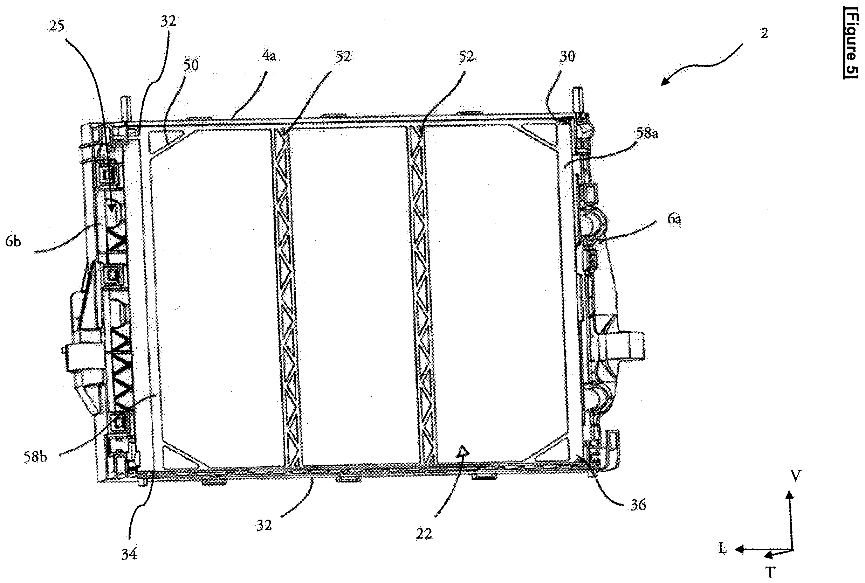

Sur cette face arrière 22 du cadre, la deuxième paroi latérale 6b du cadre 2 comporte trois doigts de fixation 13, qui participe à former avec la deuxième paroi latérale 6b la cavité, visible sur la [Figure 5], configurée pour recevoir la bouteille de déshydratation 38. Les doigts de fixation 13 forment des moyens de butée transversales au dégagement de la bouteille de déshydratation 38 lorsque celle-ci est installée dans la cavité. La cavité et les doigts de fixation 13 sont configurés pour permettre l'insertion de la bouteille de déshydratation avec un angle d'inclinaison du condenseur, de l'ordre de 20 à 30° par exemple, par rapport au plan d'allongement principal de ce condenseur lorsqu'il est en position de travail, fixé sur le cadre. La cavité et les doigts définissent alors un siège de pivotement de la bouteille autour d'un axe vertical, de manière à amener l'extrémité distale 21 en regard de la première paroi latérale 6a du cadre 2.

On comprendra que le nombre et la forme des doigts de fixation 13 peuvent varier sans sortir du contexte de l'invention, dès lors que le pivotement du condenseur dans le siège formé sur le cadre permet d'amener l'extrémité distale 21 du condenseur en regard de la paroi latérale opposée du cadre.

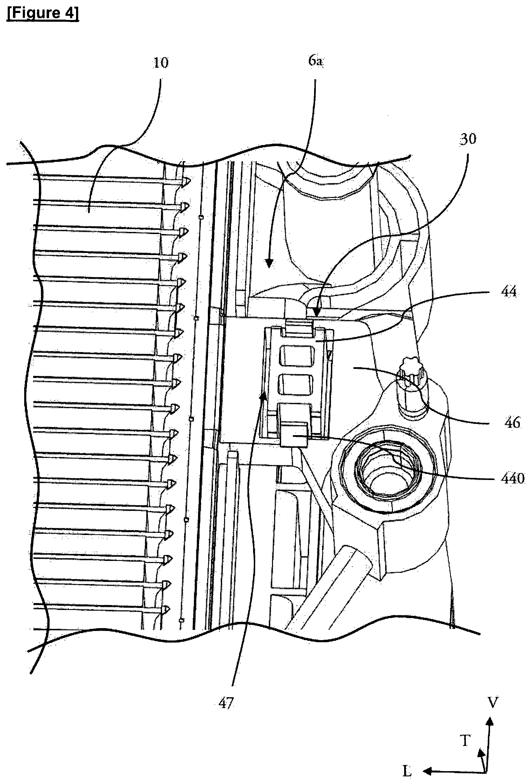

Tel que cela a été précisé précédemment, le cadre comporte sur une deuxième face, à savoir sa face arrière telle qu'elle vient d'être présenté, des deuxièmes moyens de fixation 30 configurés pour permettre la fixation d'un deuxième échangeur thermique, ici le condenseur 10, via une insertion dans un deuxième sens d'insertion Ib opposé au premier sens d'insertion la décrit précédemment pour la fixation du premier échangeur thermique sur la première face, ou face avant 20, du cadre. Dans la suite de la description, des deuxièmes moyens de fixation 30 du condenseur 10 sur le cadre 2 vont notamment être décrits en référence à la [Figure 4] illustrant une vue rapprochée d'un de ces deuxièmes moyens de fixation 30.

Les deuxièmes moyens de fixation 30 comportent d'une part les doigts de fixation 13 qui viennent d'être décrits sur la deuxième paroi latérale 6b et d'autre part au moins un élément de fixation 44 formé sur la première paroi latérale 6a du cadre en combinaison avec une patte de fixation 46 formée sur le condenseur. Conformément à ce qui a été décrit en relation avec les premiers moyens de fixation, l'élément de fixation 44 et la patte de fixation 46 sont configurés pour permettre une fixation du condenseur sur le cadre par encliquetage, selon une direction d'insertion transversale, perpendiculaire au plan d'allongement principal du condenseur lorsqu'il est assemblé sur le cadre.

Plus particulièrement, l'élément de fixation 44 fait saillie de la première paroi latérale 6a du cadre 2 et comporte des crochets 440 flexibles susceptibles d'être déformés élastiquement pour prendre une position de prise d'un rebord de la patte de fixation 46 correspondante.

La patte de fixation 46 s'étend en saillie du condenseur suivant la direction longitudinale L, de telle sorte qu'elle soit en regard de l'élément de fixation 44 de la première paroi latérale 6a lorsque le condenseur a été pivoté autour de l'axe de la bouteille de déshydratation. La patte de fixation 46 comporte un orifice central 47 dimensionné pour recevoir l'élément de fixation formant saillie du cadre et au moins une paroi participant à délimiter l'orifice central est bloquée par le retour élastique du crochet contre lequel vient en butée un rebord de cette paroi.

On comprend que la fixation du condenseur 10 sur la deuxième face du cadre 2, à savoir la face arrière 22, s'effectue en fin de montage suivant un deuxième sens d'insertion Ib qui s'étend suivant la direction transversale T du système thermique 1 et dans le sens opposé au premier sens d'insertion du radiateur, tel que précédemment décrit. Dès lors, il peut être considéré que la fixation du condenseur 10 sur le cadre 2 s'effectue par l'intermédiaire d'un montage en translation puisque la dernière étape du procédé de fixation du condenseur consiste en une poussée mécanique suivant la direction transversale T de la patte de fixation 46 autour de l'élément de fixation 44 afin de permettre l'encliquetage du condenseur sur le cadre.

Tel que cela a été précédemment décrit, on pourra prévoir que certains points de fixation du condenseur sur le cadre soient réalisés par des moyens de vissage, dès lors que ces moyens de vissage sont configurés pour réaliser la fixation du condenseur selon le deuxième sens d'insertion Ib.

La [Figure 5] illustre le cadre 2 monobloc seul, sans les échangeurs thermiques fixés selon l'invention de part et d'autre du cadre via les premiers et deuxièmes moyens de fixation disposés respectivement sur l'une et l'autre des faces du cadre. Au niveau d'au moins une paroi latérale, le cadre monobloc comporte au moins une paroi d'étanchéité 58a, 58b qui s'étend perpendiculairement à la paroi latérale, en s'étendant vers l'intérieur du cadre depuis la paroi latérale correspondante.

Dans l'exemple illustré, la ou les parois d'étanchéité sont issues de matière avec le reste du cadre, c'est-à-dire que les parois du cadre et chaque paroi d'étanchéité sont réalisées d'un seul tenant, avec la ou les parois d'étanchéité qui peuvent présenter une épaisseur moindre de celle des parois latérales et longitudinales du cadre. Selon l'invention, la ou les parois d'étanchéité peuvent être surmoulées sur la paroi latérale ou la paroi longitudinale du cadre correspondante, de manière à être réalisées dans deux matériaux différents.

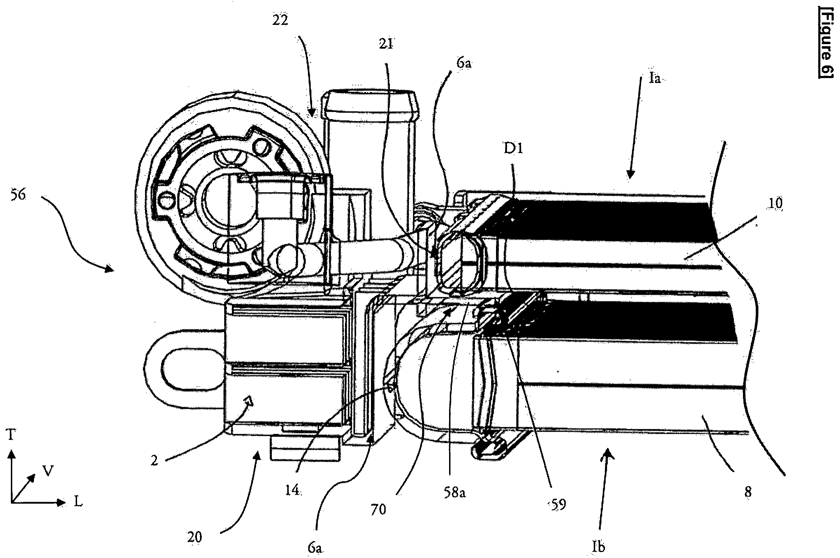

Plus particulièrement, le cadre 2 comporte sur la première paroi latérale 6a une première paroi d'étanchéité 58a, visible notamment sur la [Figure 5] et sur la [Figure 6]. La première paroi d'étanchéité 58a s'étend de façon continue sur toute la dimension verticale V de la paroi latérale correspondante, sensiblement au centre de cette paroi lorsque l'on considère la dimension transversale.

La première paroi d'étanchéité 58a s'étend depuis la première paroi latérale 6a, sensiblement perpendiculaire à celle-ci de manière à s'étendre sensiblement parallèlement au plan d'allongement principal du condenseur ou du radiateur. La première paroi d'étanchéité 58a présente une extrémité libre 59a disposée à l'intérieur du cadre et agencée selon la direction transversale entre les deux échangeurs thermiques.

Tel que cela est visible sur la [Figure 6], la première paroi latérale 6a peut présenter deux parties s'étendant sur deux niveaux décalés longitudinalement pour être au plus près des boites collectrices des radiateur 8 et condenseur 10, la première paroi d'étanchéité s'étendant sensiblement perpendiculairement à la première paroi latérale 6a au niveau de la jonction de ces deux parties.

La [Figure 6] illustre en outre la position de l'extrémité libre 59a de la première paroi d'étanchéité 58a dans un espace entre les deux échangeurs thermiques et elle permet ainsi d'illustrer la chicane d'entrave à la circulation d'air que participe à former la première paroi d'étanchéité.

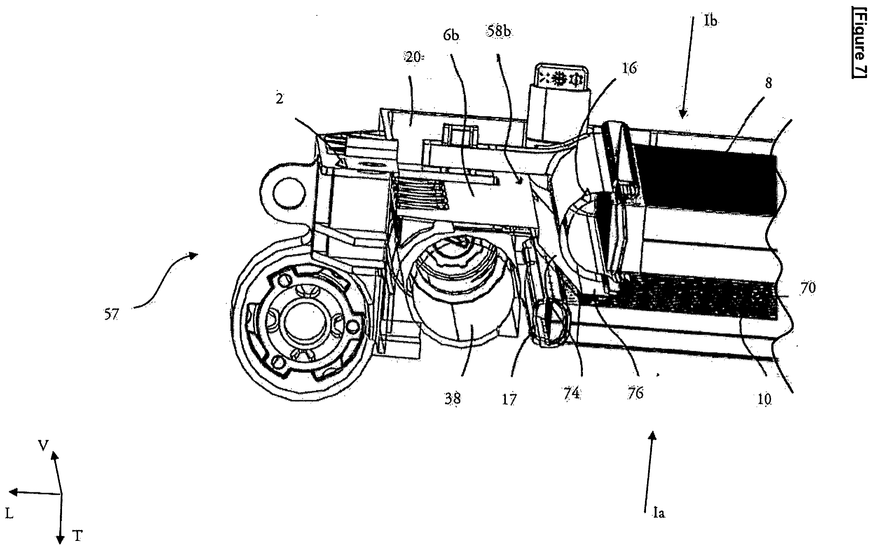

Les échangeurs thermiques, à savoir le radiateur 8 fixé sur la première face, ou face avant 20, du cadre et le condenseur 10 fixé sur la deuxième face opposée du cadre, sont montés en série sur le cadre 2 chacun sur un côté respectif du cadre afin que le flux d'air entrant dans le système thermique les traverse l'un après l'autre. La [Figure 6] et la [Figure 7] permettent ainsi d'illustrer les sens d'insertion Ia, Ib du radiateur 8 et du condenseur 10 selon l'invention, à savoir des sens opposés.

Le condenseur 10 et le radiateur 8 sont montés sur le cadre de telle sorte qu'ils soient espacés, au niveau de leur surface d'échange respectives et selon la direction transversale perpendiculaire aux plans d'allongement respectifs des échangeurs thermiques, d'une distance D1, avantageusement comprise entre 10mm et 50mm. Tel qu'illustré, les boites collectrices disposées de part et d'autre des surfaces d'échange thermique présentent une dimension selon la direction transversale qui est supérieure à la dimension correspondante des surfaces d'échange et la distance D1 entre le condenseur 10 et le radiateur 8 précédemment décrite est prévue pour permettre de ménager un espace 70 entre au moins une boite collectrice d'un échangeur thermique et l'autre échangeur thermique qui soit suffisamment grand pour recevoir au moins l'extrémité libre 59a de la première paroi d'étanchéité 58a formant saillie de la première paroi latérale 6a.

Il convient de noter que l'extrémité libre 59a ne s'étend pas longitudinalement au-delà de la boite collectrice disposée la plus à l'intérieur du cadre. De la sorte, la première paroi d'étanchéité 58a forme une paroi d'entrave à la circulation d'air risquant de fuiter entre les échangeurs thermiques et la première paroi latérale du fait de sa présence entre les échangeurs. Et la première paroi d'étanchéité n'est pas longitudinalement en travers de l'air passant par la surface d'échange thermique du radiateur.

Par ailleurs, dans l'exemple illustré sur la [Figure 5] et tel que cela est visible sur la [Figure 7], le cadre 2 comporte également une deuxième paroi d'étanchéité 58b formant saillie de la deuxième paroi latérale 6b du cadre 2. La deuxième paroi d'étanchéité 58b s'étend de façon continue sur toute la dimension verticale V de la paroi latérale correspondante.

La deuxième paroi d'étanchéité 58b présente une forme distincte de celle décrite précédemment pour la première paroi d'étanchéité 58a, du fait notamment de la présence de la cavité de réception de la bouteille déshydratante 38. Notamment, la deuxième paroi d'étanchéité s'étend depuis une portion de la deuxième paroi latérale 6b décalée transversalement, et elle présente deux parties successives. Une première partie inclinée 74 s'étend depuis la deuxième paroi latérale et elle est prolongée par une deuxième partie plane 76, qui s'étend suivant la direction longitudinale L, sensiblement dans un plan parallèle au plan principal d'allongement du radiateur et du condenseur. La première partie inclinée 74 présente une inclinaison, qui est ici de l'ordre de 45° par rapport à la direction longitudinale sans que cela soit limitatif de l'invention, qui permet de positionner la deuxième partie plane dans l'espace 70 ménagé entre les deux échangeurs thermiques, tout en permettant de contourner la bouteille de déshydratation 38.

Tel que précédemment décrit, l'extrémité libre de la deuxième paroi d'étanchéité, formée par la deuxième partie plane 76, forme une paroi d'entrave à la circulation d'air risquant de fuiter entre les échangeurs thermiques et la deuxième paroi latérale.

Il convient de noter qu'une telle configuration des parois d'étanchéité 58a, 58b, à savoir des parois d'étanchéité venues de matière avec, ou surmoulées sur, la paroi latérale ou longitudinale correspondante et dont l'extrémité libre s'étend vers l'intérieur du cadre au moins au niveau des boites collectrices du radiateur 8 et du condenseur 10, n'est possible que grâce à la spécificité de montage du condenseur 10 et du radiateur 8 selon des sens d'insertion la et Ib opposés, de part et d'autre de chaque paroi d'étanchéité.

Tel qu'illustré sur la [Figure 5], le cadre 2 comprend également au moins une paroi structurelle 52, ici deux parois structurelles. Les deux parois structurelles 52 se présentent dans l'exemple illustré comme des parois s'étendant perpendiculairement entre la première paroi longitudinale 4a et la deuxième paroi longitudinale 4b. Lorsque les échangeurs thermiques sont montés sur le cadre du dispositif thermique, la ou les parois structurelles sont configurées pour s'étendre dans l'espace 70 ménagé selon la direction transversale entre les échangeurs thermiques, à savoir le condenseur 10 et le radiateur 8.

Dans une variante non illustrée, les deux parois structurelles 52 pourraient s'étendre perpendiculairement aux parois latérales 6a, 6b. Il convient de noter que l'agencement illustré, à savoir des parois structurelles qui s'étendent depuis une paroi longitudinale à l'autre, permet aux parois structurelles 52 de ne pas interférer avec les parois d'étanchéité 58a, 58b disposées en saillie des parois latérales 6a, 6b.

Les parois structurelles 52 ont pour rôle de renforcer la structure du cadre 2 mais également de faciliter le montage du système thermique en agissant le cas échéant comme butée lors du positionnement du radiateur et du condenseur dans le cadre 2 selon les sens d'insertion opposés.

Par ailleurs, sur la [Figure 5], on a également rendu visible dans chacun des coins 31, 32, 34, 36, une barre de renfort 50 disposée en équerre. Les barres de renfort 50 permettent de renforcer la structure du cadre 2 et notamment des parois d'étanchéité agencées perpendiculairement en saillie de chacune des parois latérales, à la fois pendant le montage du système thermique mais également lors de son utilisation dans un véhicule automobile. L'invention atteint ainsi le but qu'elle s'était fixée en améliorant l'étanchéité du système thermique grâce au montage sur un même cadre monobloc de différents échangeurs thermiques suivant des sens d'insertion opposés. Le montage des échangeurs thermiques suivant des sens d'insertion opposés permet de contrôler au mieux les chaines de côtes d'assemblage pour assurer la position des échangeurs par rapport au cadre tout en laissant un espace situé entre les deux échangeurs thermiques. Un tel montage permet ainsi de ménager sur ce cadre monobloc des moyens d'étanchéité rendus solidaires du cadre avant le montage des échangeurs et dimensionnés pour s'étendre au moins en partie dans un espace situé entre les deux échangeurs thermiques. On s'assure ainsi d'une fonction d'étanchéité efficace permettant de limiter les fuites d'air entre les échangeurs thermiques et le cadre, du fait de l'extrémité libre du joint d'étanchéité qui s'étend à l'intérieur d'une zone définie entre les échangeurs thermiques et forme une chicane efficace.

L'invention décrite ici peut notamment trouver application dans un système thermique pour véhicule automobile électrique, étant entendu qu'elle peut s'appliquer à toute forme et/ou dimension de système thermique intégré dans tout type de véhicule automobile, électrique ou non. Par ailleurs, différents moyens de fixation peuvent être mis en œuvre sans sortir du contexte de l'invention dès lors qu'ils permettent une fixation sur un cadre monobloc d'un premier échangeur par un premier côté du système thermique et une fixation sur ce même cadre monobloc d'un deuxième échangeur par un deuxième côté du système thermique.

## Revendications

1. Système thermique (1) d'un véhicule automobile comprenant un cadre (2) monobloc composé principalement de deux parois latérales (6a, 6b) parallèles l'une à l'autre et de deux parois longitudinales (4a, 4b) parallèles l'une à l'autre et s'étendant perpendiculairement par rapport aux deux parois latérales (6a, 6b), le cadre (2) comprend une face avant (20) et une face arrière (22), et le cadre comprend sur chacune de ses deux faces (20, 22) des moyen de fixation (29, 30) d'au moins un échangeur thermique (8, 10), lesdits moyens de fixation étant tels que des premiers moyens de fixation (29) disposés sur la face avant (20) du cadre sont configurés pour la fixation d'un échangeur thermique (8) selon un premier sens d'insertion (la) et que des deuxièmes moyens de fixation (30) disposés sur la face arrière (22) du cadre sont configurés pour la fixation d'un échangeur thermique (10) selon un deuxième sens d'insertion (Ib) opposé au premier sens d'insertion, et ledit cadre monobloc comporte au moins une paroi d'étanchéité (58a, 58b) qui s'étend en saillie d'une paroi latérale (6a, 6b) et/ou depuis une paroi longitudinale (4a, 4b) du cadre, **caractérisé en ce que** ladite paroi d'étanchéité comportant au moins une portion d'extrémité libre s'étendant dans un espace (70) ménagé transversalement entre les deux échangeurs thermiques (8, 10).

2. Système thermique (1) selon la revendication précédente, dans lequel les premiers moyens de fixation (29) et les deuxièmes moyens de fixation (30) sont configurés pour la fixation de leur échangeur thermique (8, 10) respectif avec le cadre (2) selon une direction transversale, perpendiculaire à un plan d'allongement principal des échangeurs thermiques en position fixe sur le cadre.

3. Système thermique (1) selon la revendication précédente, dans lequel les premiers moyens de fixation (29) et les deuxièmes moyens de fixation (30) comportent des moyens de fixation par encliquetage, avec au moins un moyen de fixation (12, 44) déformable élastiquement selon une direction perpendiculaire à la direction transversale et comprenant une butée d'arrêt apte à bloquer la position transversale de l'échangeur thermique (8, 10) correspondant sur le cadre.

4. Système thermique (1) selon la revendication l'une des revendications précédentes, dans lequel l'au moins une paroi d'étanchéité (58a, 58b) s'étend dans un plan parallèle au plan d'allongement principal des échangeurs thermiques (8, 10) fixés sur le cadre (2).

5. Système thermique (1) selon l'une quelconque des revendications précédentes, dans lequel la au moins une paroi d'étanchéité (58a, 58b) est issue de la matière formant le cadre (2).

6. Système thermique (1) selon l'une des revendications précédentes dans lequel, le cadre (2) comprend au moins une paroi structurelle (52) qui s'étend entre les deux parois longitudinales (4a, 4b) ou les deux parois latérales (6a, 6b) du cadre (2) et entre les au moins deux éléments thermiques (8, 10).

7. Système thermique (1) selon la revendication précédente, dans lequel les aux moins deux éléments thermiques sont un condenseur (10) positionné sur la face arrière (22) du cadre (2) et un radiateur (8) positionné sur la face avant (20) du cadre (2), le condenseur (10) et le radiateur (8) étant disposés en série suivant une direction transversale (T) du flux d'air à travers le système thermique (1).

8. Véhicule automobile comprenant au moins un système thermique (1) suivant l'une des revendications précédentes.

9. Procédé d'assemblage du système thermique (1) selon l'une des revendications 1 à 7, dans lequel un premier échangeur thermique (8, 10) est positionné sur la face avant (20) du cadre (2) suivant un premier sens d'insertion (la) et un deuxième échangeur thermique (8, 10) est positionné sur la face arrière (22) du cadre (2) suivant un deuxième sens d'insertion (Ib), les sens d'insertion (la) et (Ib) étant opposés l'un par rapport à l'autre.

## Patentansprüche

1. Thermisches System (1) eines Kraftfahrzeugs, umfassend einen einteiligen Rahmen (2), der hauptsächlich aus zwei zueinander parallelen Seitenwänden (6a, 6b) und zwei zueinander parallelen Längswänden (4a, 4b) besteht, die sich senkrecht zu den beiden Seitenwänden erstrecken (6a, 6b) erstreckt, wobei der Rahmen (2) eine Vorderseite (20) und eine Rückseite (22) aufweist und der Rahmen auf jeder seiner beiden Seiten (20, 22) Mittel (29, 30) zur Befestigung mindestens eines Wärmetauschers (8, 10) aufweist, wobei die Befestigungsmittel so ausgebildet sind, dass erste Befestigungsmittel (29), die auf der Vorderseite (20) des Rahmens angeordneten ersten Befestigungsmittel (29) zur Befestigung eines Wärmetauschers (8) in einer ersten Einführrichtung (la) und zweite Befestigungsmittel (30), die an der Rückseite (22) des Rahmens angeordnet sind, zur Befestigung eines Wärmetauschers (10) in einer zweiten Einführrichtung (Ib) entgegengesetzt zur ersten Einführrichtung konfiguriert sind, und der einteilige Rahmen mindestens eine Dichtungswand (58a, 58b) aufweist, die sich von einer Seitenwand (6a, 6b) und/oder einer Längswand (4a, 4b) des Rahmens vorstehend erstreckt, **dadurch gekennzeichnet, dass** die Dichtungswand mindestens einen freien Endabschnitt aufweist, der sich in einem Raum (70) erstreckt, der quer zwischen den beiden Wärmetauschern (8, 10) vorgesehen ist.

2. Thermisches System (1) gemäß dem vorstehenden Anspruch, wobei die erste Befestigungseinrichtung (29) und die zweite Befestigungseinrichtung (30) so konfiguriert sind, dass sie ihren jeweiligen Wärmetauscher (8, 10) in Querrichtung, senkrecht zu einer Hauptausdehnungsebene der Wärmetauscher, in einer festen Position am Rahmen (2) befestigen.

3. Thermisches System (1) gemäß dem vorstehenden Anspruch, wobei die erste Befestigungsvorrichtung (29) und die zweite Befestigungsvorrichtung (30) Schnappbefestigungsvorrichtungen umfassen, mit mindestens einer elastisch verformbaren Befestigungsvorrichtung (12, 44) in einer Richtung senkrecht zur Querrichtung, die einen Anschlag umfasst, der die Querposition des entsprechenden Wärmetauschers (8, 10) auf dem Rahmen blockieren kann.

4. Thermisches System (1) nach einem der vorstehenden Ansprüche, wobei sich die mindestens eine Dichtungswand (58a, 58b) in einer Ebene parallel zur Hauptausdehnungsebene der an dem Rahmen (2) befestigten Wärmetauscher (8, 10) erstreckt.

5. Thermisches System (1) nach einem der vorstehenden Ansprüche, wobei die mindestens eine Dichtungswand (58a, 58b) aus dem Material hergestellt ist, aus dem der Rahmen (2) besteht.

6. Thermisches System (1) nach einem der vorstehenden Ansprüche, wobei der Rahmen (2) mindestens eine Strukturwand (52) umfasst, die sich zwischen den beiden Längswänden (4a, 4b) oder den beiden Seitenwänden (6a, 6b) des Rahmens (2) und zwischen den mindestens zwei thermischen Elementen (8, 10) erstreckt.

7. Thermisches System (1) gemäß dem vorstehenden Anspruch, wobei die mindestens zwei thermischen Elemente ein Kondensator (10), der an der Rückseite (22) des Rahmens (2) angeordnet ist, und ein Kühler (8) sind, der an der Vorderseite (20) des Rahmens (2) angeordnet ist, wobei der Kondensator (10) und der Kühler (8) in Reihe in Querrichtung (T) des Luftstroms durch das thermische System (1) angeordnet sind.

8. Kraftfahrzeug mit mindestens einem thermischen System (1) gemäß einem der vorstehenden Ansprüche.

9. Verfahren zum Zusammenbau des thermischen Systems (1) gemäß einem der Ansprüche 1 bis 7, wobei ein erster Wärmetauscher (8, 10) auf der Vorderseite (20) des Rahmens (2) in einer ersten Einbaurichtung (la) und ein zweiter Wärmetauscher (8, 10) auf der Rückseite (22) des Rahmens (2) in einer zweiten Einbaurichtung (Ib) angeordnet ist, wobei die Einbaurichtungen (la) und (Ib) einander entgegengesetzt sind.

## Claims

1. Thermal system (1) of a motor vehicle comprising a one-piece frame (2) composed mainly of two side walls (6a, 6b) parallel to each other and two longitudinal walls (4a, 4b) parallel to each other and extending perpendicularly to the two side walls (6a, 6b), the frame (2) comprises a front face (20) and a rear face (22), and the frame comprises on each of its two faces (20, 22) means for fixing (29, 30) at least one heat exchanger (8, 10), said fixing means being such that first fixing means (29) arranged on the front face (20) of the frame are configured for fixing a heat exchanger (8) in a first insertion direction (la) and second fixing means (30) arranged on the rear face (22) of the frame are configured for fixing a heat exchanger (10) in a second insertion direction (Ib) opposite to the first insertion direction, and said one-piece frame includes at least one sealing wall (58a, 58b) that extends protruding from a side wall (6a, 6b) and/or from a longitudinal wall (4a, 4b) of the frame, **characterized in that** said sealing wall having at least one free end portion extending in a space (70) provided transversely between the two heat exchangers (8, 10).

2. Thermal system (1) according to the preceding claim, wherein the first fixing means (29) and the second fixing means (30) are configured for fixing their respective heat exchanger (8, 10) to the frame (2) in a transverse direction, perpendicular to a main elongation plane of the heat exchangers in fixed position on the frame.

3. Thermal system (1) according to the preceding claim, wherein the first fixing means (29) and the second fixing means (30) include snap-fit fixing means, with at least one elastically deformable fixing means (12, 44) in a direction perpendicular to the transverse direction and comprising a stop capable of blocking the transverse position of the corresponding heat exchanger (8, 10) on the frame.

4. Thermal system (1) according to any one of the preceding claims, wherein the at least one sealing wall (58a, 58b) extends in a plane parallel to the main elongation plane of the heat exchangers (8, 10) fixed on the frame (2).

5. Thermal system (1) according to any one of the preceding claims, wherein the at least one sealing wall (58a, 58b) is made from the material forming the frame (2).

6. Thermal system (1) according to any one of the preceding claims wherein, the frame (2) comprises at least one structural wall (52) which extends between the two longitudinal walls (4a, 4b) or the two side walls (6a, 6b) of the frame (2) and between the at least two thermal elements (8, 10).

7. Thermal system (1) according to the preceding claim, wherein the at least two thermal elements are a condenser (10) positioned on the rear face (22) of the frame (2) and a radiator (8) positioned on the front face (20) of the frame (2), the condenser (10) and the radiator (8) being arranged in series following a transverse direction (T) of the air flow through the thermal system (1).

8. Motor vehicle comprising at least one thermal system (1) according to any one of the preceding claims.

9. Method of assembling the thermal system (1) according to any one of claims 1 to 7,
wherein a first heat exchanger (8, 10) is positioned on the front face (20) of the frame (2) following a first insertion direction (la) and a second heat exchanger (8, 10) is positioned on the rear face (22) of the frame (2) following a second insertion direction (Ib), the insertion directions (la) and (Ib) being opposite to each other.
